(19) Europäisches Patentamt
European Patent Office
Office européen des brevets

(11) **EP 1 590 971 B1**

(12) **EUROPEAN PATENT SPECIFICATION**

(45) Date of publication and mention
of the grant of the patent:
**21.10.2015 Bulletin 2015/43**

(51) Int Cl.:
***H04W 36/30*** (2009.01)

(21) Application number: **04708246.6**

(86) International application number:
**PCT/US2004/003327**

(22) Date of filing: **04.02.2004**

(87) International publication number:
**WO 2004/073322 (26.08.2004 Gazette 2004/35)**

(54) **NETWORK ASSISTED CELL RESELECTION IN WIRELESS COMMUNICATIONS SYSTEMS**

NETZWERKUNTERSTÜTZTE ZELLENNEUAUSWAHL IN DRAHTLOSEN KOMMUNIKATIONSSYSTEMEN

NOUVELLE SELECTION DE CELLULE ASSISTEE PAR LE RESEAU DANS DES SYSTEMES DE COMMUNICATION SANS FIL

(84) Designated Contracting States:
**DE FR GB IT**

(30) Priority: **05.02.2003 US 358864**

(43) Date of publication of application:
**02.11.2005 Bulletin 2005/44**

(73) Proprietor: **Motorola Mobility LLC**
**Libertyville, IL 60048 (US)**

(72) Inventors:
 • **PECEN, Mark**
 **Palatine, IL 60067 (US)**
 • **ANDERSEN, Niels Peter Skov**
 **DK-4000 Roskilde (DK)**
 • **HOWELL, Stephen**
 **Gloucestershire GL4 3TQ (GB)**
 • **SHEYNMAN, Arnold**
 **Northbrook, IL 60062 (US)**

(74) Representative: **Boult Wade Tennant**
**Verulam Gardens**
**70 Gray's Inn Road**
**London WC1X 8BT (GB)**

(56) References cited:
**US-A- 5 956 644**  **US-A1- 2001 041 569**
**US-A1- 2001 041 569**  **US-A1- 2002 032 032**
**US-A1- 2002 032 032**  **US-A1- 2002 168 980**
**US-A1- 2002 168 980**  **US-B1- 6 263 203**
**US-B1- 6 295 450**

 • **ERICSSON ET AL: 3GPP DRAFT; G2-010430, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Makuhari, Japan; 20011205, 5 December 2001 (2001-12-05), XP050119244 [retrieved on 2001-12-05]**
 • **"Network Assisted Cell Change; Concept document" 3GPP DRAFT; GP-010361, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Boston; 20010117, 17 January 2001 (2001-01-17), XP050002058 [retrieved on 2001-01-17]**
 • **"Radio Subsystem Link Control" 3GPP TS 45.008 VERSION 5.8.0 RELEASE 5, 30 September 2002 (2002-09-30), pages 48-71, XP002571053**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE DISCLOSURE

The present disclosure relates generally to wireless communications, and more particularly to cell re-selection in wireless communications networks, for example in Global System for Mobile Communication (GSM) and/or (UMTS) networks during packet data interchanges, and methods therefor.

BACKGROUND

The General Packet Radio Service (GPRS) and its superset, Enhanced Data for Global Evolution (EDGE) for GSM have enabled data interchange among mobile wireless subscriber device users. GPRS/EDGE permit efficient use of radio and network resources when data transmission characteristics are packet based, intermittent and non-periodic, possibly frequent with small transfers of data, for example, less than 500 octets, and possibly infrequent, with large data transfers, for example, transfers of more than several hundred Kbytes.

Public Land Mobile Network (PLMN) operators originally saw GPRS/EDGE as means for generating additional revenues based on excess capacity, for example, during non-peak usage periods. User applications were originally envisioned to include Internet browsing capabilities, electronic mail, file transfers and other applications for which best efforts data transfers were appropriate. The market for GPRS/EDGE based services however has grown dramatically and now constitutes a significant amount of network traffic during peak usage periods.

The concepts of Network Controlled Cell Selection (NCCS) and Network Assisted Cell Selection (NACS) were introduced into GSM standards to increase the efficiency of the 3rd Generation enhancement to the General Packet Radio Service (GPRS), addressing the negative impact that cell reselection has on user data throughput.

In order to maintain system simplicity, there exists no real-time handover procedure specified for best effort packet data transfers over GPRS/EDGE. Cell change is achieved in R5 and prior specifications of GPRS/EDGE by simply allowing the mobile user equipment (UE) to reselect cells as it does in idle mode. This procedure causes the mobile UE to abort its packet transfer on one cell and completely re-establish the ongoing transfer on another cell.

This simple cell change mechanism is fairly effective if the new cell to which the mobile UE reselects supports GPRS/EDGE data services and has sufficient capacity to support additional packet data traffic. What frequently occurs in system operation, however, is that after the mobile UE aborts operation on the old cell and attempts to reselect to a new cell, the packet data transfer fails, often because the new cell does not have sufficient capacity to support additional packet data traffic. The mobile UE must subsequently wait and try to re-establish the data transfer. Meanwhile, the mobile UE may reselect to another cell, which may accommodate its request for a packet data transfer.

The mobile station, in GPRS standby and Ready states, performs cell selection autonomously by monitoring the signal strength of adjacent cells specified in a Broadcast Allocation (BA) list, which are broadcast on the PBCCH or on the BCCH in the absence of the PBCCH. During packet transfer mode operation, the UE monitors the serving cell carrier and all neighbor cell carriers indicated on the BA list. A received signal strength measurement indicator (RSSI) is made in every TMDA frame on the BCCH carriers, one after another.

The reselection decision process uses the received signal level average (RLA_P), which is calculated as a running average of samples collected over a period of 5 seconds and is maintained for each BCCH carrier. The samples allocated to each carrier are distributed as uniformly as possible over the evaluation period. At least 5 received signal level measurement samples are required for a valid RLA_P.

Several criteria are used for GPRS cell reselection. A path loss criterion parameter C1 represents a minimum signal level for cell reselection for GPRS. C1 is based on the corresponding RLA_P value and represents a link budget computation based on path loss and assumptions about the RSSI of the serving cell. The mobile reselects when C1 is 0dBM and when other requirements are met. A cell ranking criterion parameter C32 is for selecting cells among those with the same priority. For the serving cell, C32 is equal to C1. For each neighbor cell, C32 is equal to C1 modified with cell broadcast parameters. The signal level threshold criterion parameter C31 for hierarchical cell structures (HCS) is used to assess prioritized hierarchical GPRS.

The mobile station updates RLA_P and determines C1, C31 and C32 for the serving cell and the non-serving (neighbor) cells for each new sample collected or every second, whichever is greater. Cell reselection is performed if the path loss criterion parameter C1 for the serving cell falls below zero, and if a suitable non-serving cell (see 3GPP TS 03.22) is determined to be better than the serving cell. Generally, the best cell is the one having the greatest value of C32. When evaluating the best cell, hysteresis parameter values are subtracted from the C32 value for the neighbor cells. The hysteresis parameter values are broadcast on the serving cell PBCCH. For cell reselection occurring within 15 seconds of a previous reselection, the hysteresis value for RSSI equals to 5 dB. And if no suitable cell is located within 10 seconds, a cell selection algorithm is performed.

During packet data interchange, stationary or semi-stationary mobile UE in suburban and/or urban environments may reselect substantially continuously, usually among 3 to 5 cells every 15 to 45 seconds, forcing the need for re-establishment of the packet data transfer every time reselection occurs. The high frequency of cell reselection however may adversely impact user data throughput.

A draft 3GPP Technical Report, Tdoc G2-010430, entitled '3rd Generation Partnership Project; Technical Specification Group GSM EDGE Radio Access Network; External Network Assisted Cell Change (Release 5), 3GPP TSG GERAN WG2 #6bis, 22-26 October 2001, Aix-en-Provence, France, Source: Ericsson; Vodafone, describes a Network Assisted Cell Change, NACC, feature which is extended to handle external BSC cell changes and also cell changes between GERAN and UTRAN cells. For fast reselection of cells, the mobile station needs to have knowledge of certain system information of the target cell before performing the cell change. If the cells then belong to different BSCs/RNCs, the required system information has to be transported between BSCs/RNCs so as to be made available to the mobile stations when re-selecting cells. The draft TR proposes to pack the required system information into a container within a New RAN-INFORMATION message that may be sent on the Iur-g interface or routed via the Core network from the origin to the target RAN node.

The various aspects, features and advantages of the disclosure will become more fully apparent to those having ordinary skill in the art upon careful consideration of the following Detailed Description thereof with the accompanying drawings described below.

BRIEF DESCRIPTION OF THE DRAWINGS

FIG.1 is an exemplary cellular communications network.
FIG. 2 is an exemplary process flow diagram.
FIG. 3 is a portion of an exemplary mobile station architecture.
FIG. 4 represents reselection measurements for a predictor.
FIG. 5 represents reselection criteria for the predictor.
FIG. 6 is an exemplary message for communication reselection information from a mobile station to a network.
FIG. 7 is another exemplary process flow diagram.

DETAILED DESCRIPTION

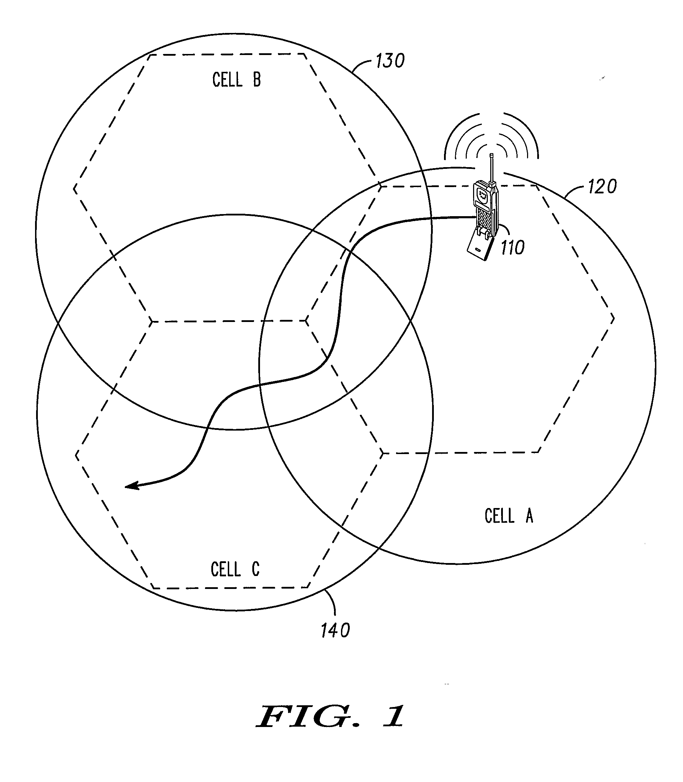

In FIG. 1, under autonomous cell reselection, for example, during packet data interchange, a mobile station 110, located initially in Cell A 120 and moving toward Cell B 130, attempts to reselect to Cell B based on a known autonomous reselection protocol, for example, when the path loss criterion C1 for Cell A falls below 0dBm. If Cell B is incapable of supporting the packet data interchange, the mobile station must reselect to another cell, for example, to Cell C, if another cell is available or the mobile station attempt to reselect to Cell B at a later time.

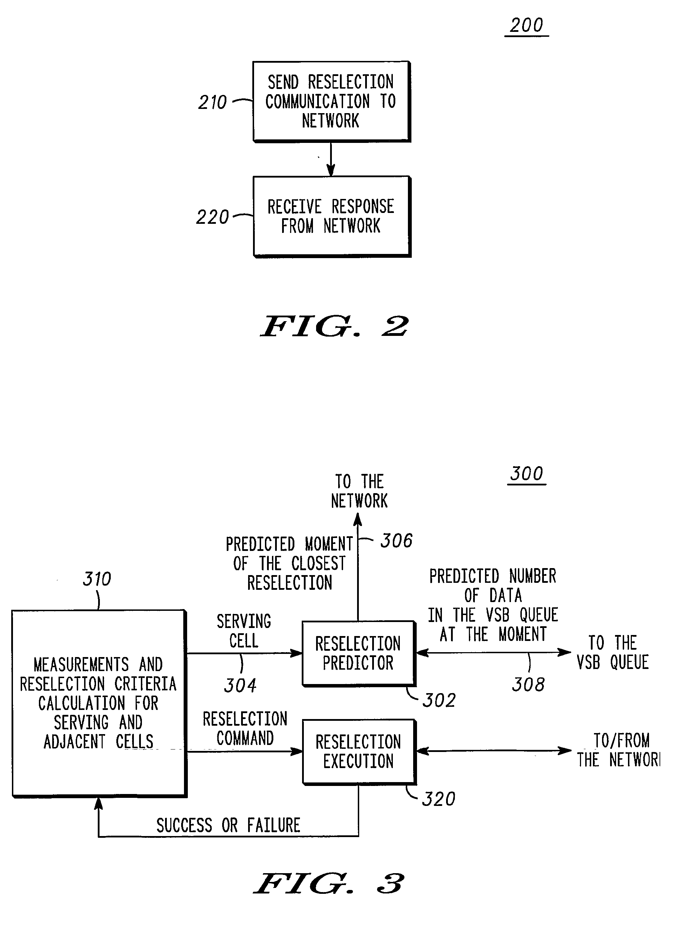

In the process diagram 200 of FIG. 2, according to one mode of operation, at block 210 the mobile station sends a reselection communication to the network before reselecting. The reselection communication is an indication that reselection is likely to occur at some future time, or that reselection is imminent.

In one example, the mobile station architecture includes a reselection predictor that predicts when reselection is likely to occur. In the exemplary implementation of FIG. 3, the reselection predictor 302 receives C1 parameter values, which are calculated based on RSSI measurements, at an input 304 from a measurement module 310. The C1 parameter value is exemplified herein, but other criteria may be used alternatively.

The reselection predictor includes an output 306 for indicating when reselection is likely to occur. In one example, the mobile station sets a "reselection" bit in an uplink measurement report sent to the network to notify the network of the impending reselection based upon the output of the reselection predictor. The exemplary reselection predictor also includes a second output 308 for indicating to a virtual bearer (VB), for example, a virtual streaming bearer (VSB), or some other module on the mobile station that reselection is imminent. The outputs 306 and 308 may be provided in the alternative, or both outputs may be provided.

In FIG. 3, reselection is performed by a reselection execution module 320 on the mobile station in response to a reselection command when reselection is required. The reselection command may result from a determination made at the network or at the mobile station, as discussed more fully below.

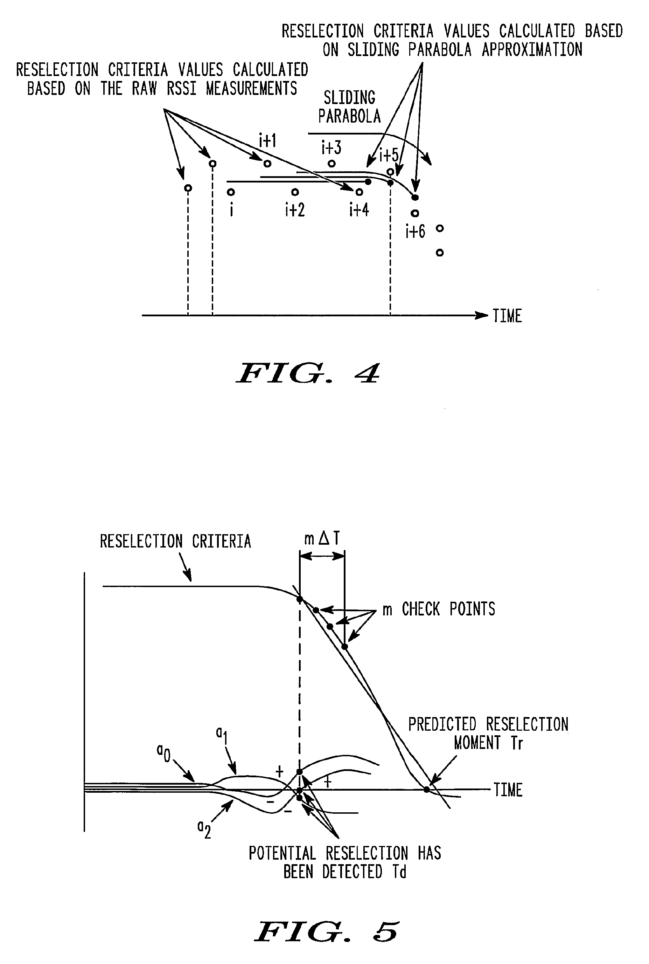

In one example, generally, reselection is predicted based upon reselection criteria, RC, computed from a set of several curves fit to approximate corresponding sets C1 parameter values, and based upon coefficients of the curve. In the example, the parabolic curves approximate a set of several $y_i = C1$ parameter values, which are based on corresponding RSSI measurements acquired at time $t_i$. Curve coefficients $a_0$, $a_1$ and $a_2$ are computed as a function of $y_i$ and $t_i$ using a minimum least squares method based upon a corresponding set of C1 parameter values. In FIG. 4, each parabolic curve is computed to approximate 5 C1 parameter values. For each new C1 parameter value, a new set of parabolic curve coefficients is generated to approximate the 5 most recent C1 parameter values. In FIG. 4, the first parabolic curve is based upon C1 values at times $t_i$ through $t_{i+4}$, the next parabolic curve is based upon C1 values at times $t_{i+1}$ through $t_{i+5}$, and the next parabolic curve is based upon C1 values at times ti+2 through $t_{i+6}$, etc. For each parabolic curve, a reselection criterion, RC, is computed at the time corresponding to last C1 value using the relation $RC = a_0 + a_1 t_n + a_2 t_n^2$. Several reselection criteria, RC, points are illustrated in FIG. 4.

An exemplary algorithm for the reselection predictor starts the *n*-points sliding parabola calculation by finding required initial sums based on the first $y_j$, where $y_j$ is the C1 parameter value from the GSM 3GPP standards discussed above, reselection criteria values at the corresponding moments $t_j$:

$$S_{t0} = \sum_{j=1}^{n} t_j;$$

$$S_{tt0} = \sum_{j=1}^{n} t_j t_j;$$

$$S_{ttt0} = \sum_{j=1}^{n} t_j t_j t_j;$$

$$S_{tttt0} = \sum_{j=1}^{n} t_j t_j t_j t_j;$$

$$S_{y0} = \sum_{j=1}^{n} y_j;$$

$$S_{ty0} = \sum_{j=1}^{n} t_j y_j;$$

$$S_{tty0} = \sum_{j=1}^{n} t_j t_j y_j;$$

The reselection criteria calculation is based on raw RSSI measurements separated in time by an interval $\Delta T$.

The following calculations are performed starting with initialization of *i = 1*.

BEGIN

    $RSSIi = get\_RSSI\_measurements(ti);$

    $yi = calculate\_reselection\_criteria(RSSIi);$

    // Current sums based on the previous ones

    $B = S_{t(i)} = S_{t(i-1)} - t_{i-1} + t_i;$

    $C = S_{tt(i)} = S_{tt(i-1)} - t_{i-1}t_{i-1} + t_i t_i;$

    $F = S_{ttt(i)} = S_{ttt(i-1)} - t_{i-1}t_{i-1}t_{i-1} + t_i t_i t_i;$

    $M = S_{tttt(i)} = S_{tttt(i-1)} - t_{i-1}t_{i-1}t_{i-1}t_{i-1} + t_i t_i t_i t_i;$

    $P = S_{y(i)} = S_{y(i-1)} - y_{i-1} + y_i;$

    $R = S_{ty(i)} = S_{ty(i-1)} - t_{i-1}y_{i-1} + t_i y_i;$

    $S = S_{tty(i)} = S_{tty(i-1)} - t_{i-1}t_{i-1}y_{i-1} + t_i t_i y_i;$

// Auxiliary parameters

    $D = S_{t(i)};$

    $E = S_{tt(i)};$

    $K = S_{tt(i)};$

    $L = S_{ttt(i)};$

    $Q = D / n;$

    $E = E - QB;$

    $F = F - QC;$

    $R = R - QP;$

    $Q = K / n;$

    $L = L - QB;$

    $M = M - QC;$

    $S = S - QP;$

    $Q = L / E;$

// Coefficients of the sliding parabola ending at the moment $t_n$

$a_2 = (S - RQ)/(M - FQ);$

$a_1 = (R - Fa_2)/E;$

$a_0 = (P - Ba_1 - Ca_2)/n;$

//Reselection criteria at the moment $t_n$ calculated based on

//approximation

$RC(t_n) = a_0 + a_1 t_n + a_2 t_n^2$

$i = i + 1;$

END

FIG. 5 is a graphical illustration of the reselection criteria RC, and coefficients $a_0$, $a_1$ and $a_2$. Reselection is determined to be imminent when RC values evaluated at endpoints of several sequential curves are descending, and when the coefficients $a_0$, $a_1$ and $a_2$ for at least some of the several sequential curves satisfy conditions indicative of an impending reselection, as discussed more fully below. In one example, when reselection is imminent, the estimated time at which cell reselection occurs is determined by the relation $T_r = -a_0(T_d)/a_1(T_d)$. The point in time $T_d$ is when a potential reselection has been detected, and $T_c = T_d + m\Delta T$ is a current moment of time. In one example, when $m = 3$, reselection is predicted as follows:

IF

$$0 < RC(T_c) < RC(T_c - \Delta T) < RC(T_c - 2\Delta T) < RC(T_d = T_c - 3\Delta T)$$

AND

$$a_0(T_d) > 0\, AND\, a_1(T_d) < 0\, AND\, sign[a_2(T_d - \Delta T)] < 0\, AND\, sign[a_2(T_d + \Delta T)] > 0$$

AND

$$sign[a_0(T_c)] > 0\, AND\, sign[a_1(T_c)] < 0$$

THEN,
the cell reselection predicted time is

$$T_r = -a_0(T_d)/a_1(T_d).$$

The reselection predictor may run continuously during a connection. Each time the conditions for predicting a reselection are satisfied, $T_r$ will be updated. When reselection conditions are no longer met, cell reselection will not be predicted. These and other aspects of reselection prediction are discussed more fully in U.S. provisional patent application No. 60/427,190 entitled "Method And Apparatus for Predicting a Cell Change" filed on 18 November 2002.

In other example, cell reselection may be predicted, determined or assessed by other means or schemes. Additionally, in some applications it may not be necessary to predict precisely when an imminent reselection will occur, so long as the mobile station informs the network with sufficient time to intervene or influences what would otherwise be an autonomous reselection process performed by the mobile station.

Once the network has received the indication from the mobile station that cell reselection is imminent, the network may take several different actions. If the network sees no benefit in commanding the mobile to a particular cell, e.g. if all cells in the mobile's BA list are equally likely to be able to provide the mobile with service or if it does not have sufficient knowledge of the cell that is to be reselected, then the network may choose to allow the mobile to carry out the cell reselection autonomously.

In some implementations, the network does not to send a communication to the mobile station in response to the reselection received therefrom. In practice, the mobile station may be programmed to reselect autonomously if it does not receive a reply within some specified time interval after sending the reselection communication to the network. This scheme reduces the network-signaling load. Alternatively, however, the network may authorize autonomous reselection by sending an affirmative communication to the mobile station.

In FIG. 2, at block 220, in some examples, the mobile wireless communications device receives a communication with reselection instructions from the network in response to the reselection communication sent by the mobile station. If the network is aware of capacity issues in one or more of cells that are reselection candidates, the network may direct the mobile station to a particular cell, for example, by sending the mobile station the Cell Index of the cell to which the networks wants the mobile to reselect. If the network is aware that the mobile station is in or near a Routing Area (RA) border and that one or more of the cells that may be reselected are in different Routing Areas to the one currently serving the mobile, the network may direct the mobile station to a particular cell within the current or other desired RA.

Allowing the network to control or assist reselection generally reduces the amount of signaling load within a network and reduces the number of breaks in data transmission during packet data interchange, including reduction in the number of SGSN re-allocations.

If the network is aware that the mobile is potentially moving out of coverage of the data service, for example, one or more of the cells that may be reselected do not support GPRS, the network may provide a communication indicating that the data service must be terminated, thereby providing some advance notice so that the mobile station may terminate the data interchange gracefully. The advanced termination notice may also be useful to applications sending or receiving data during the packet data interchange. In other examples, the network does not provide any communication to the mobile station when the network is unable to direct the mobile to reselect a cell that can provide continued data service.

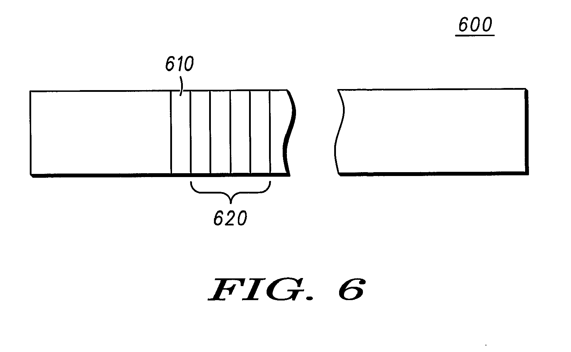

FIG. 6 is an exemplary message 600 for communicating reselection information from the mobile station to the network. In the example discussed above, the message is a measurement message, although in other examples the information may be embedded in any other wireless communications uplink message. In one example, the exemplary message includes a reselection imminent bit 610, which may be set or not set to indicate that reselection is imminent. In other examples, the message includes, in addition to or in place of the reselection bit, information regarding when reselection will occur, for example, a time period encoded by a grouping of several bits 620, the presence of which may indicate that reselection is imminent. In other examples, the mobile station indicates to the network to which cell the mobile intends to reselect. The message may also include bits for communicating this information.

In some implementations it is desirable to disable certain autonomous reselection mode features on the mobile station, for example, it may be desirable to disable a cell ranking parameter on the mobile wireless communication device. Where the exemplary reselection predictor is implemented in GSM mobile stations, it may be desirable to disable the C32 reselection criterion.

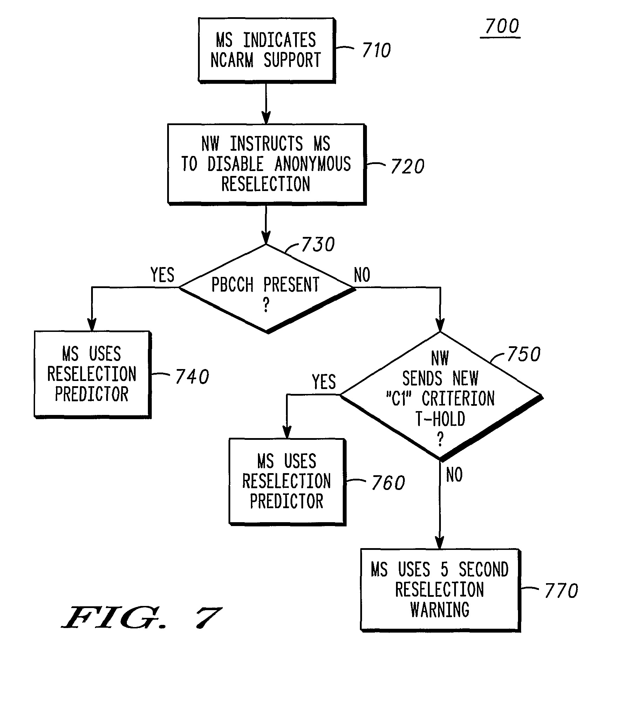

In the exemplary process flow diagram of FIG. 7, at block 710 the mobile station indicates, to the network, whether it supports controlled/assisted reselection (NCARM) mode operation, for example, whether the mobile station is capable of performing reselection prediction. This information may be communicated to the network from the mobile station, for example, on the first attach to a PLMN, or during each RAU, or at the start of each data session, i.e. on establishment of a PDP context. If the indication from the mobile station is provided at an RAU, then it will be provided each time the mobile performs an RAU. If the indication from the mobile is provided at the start of a data session then the mobile will provide the indication each time a PDP context is established and also each time an existing PDP Context is re-established. The network will maintain the information for the duration of the mobiles connection to the network.

In FIG. 7, at block 720, the mobile station receives a reselection control communication from the network in response to sending the network controlled/assisted reselection mode support communication to the network. Generally, the mobile station will perform reselection based on the reselection control communication from the network.

In one example, the network sends a communication to the mobile station disabling reselection in the mobile station based on adjacent cell signal strength. In GSM communications systems, for example, the network sends a hysteresis parameter to the mobile station disabling use of the C32 criterion parameter for reselection. The purpose of disabling the C32 criterion parameter is to strictly confine cell reselection to RF conditions on the serving cell, which may be predicted by the reselection predictor module discussed above or by some alternative reselection predictor that relies upon the current cell conditions to predict reselection.

In FIG. 7, at block 730, if a PBCCH is present in the serving cell, then the mobile will use a reselection predictor for determining when a cell change is due to occur, as indicated at block 740. In the absence of the PBCCH in the serving cell, then the network provides the mobile station with a C1 criterion threshold that is different than 0dB, which is the default C1 value. If the network provides an alternative threshold, at block 750, a then the mobile uses the reselection predictor for determining when reselection will occur, as indicated at block 760. Otherwise, at block 770, if PBCCH is not present and the network does not send a new C1 threshold, the mobile station uses a default 5 second warning for determining when reselection will occur after the 0 dBm reselection threshold condition is satisfied.

While the present disclosure and what are considered presently to be the best modes of the inventions have been described in a manner that establishes possession thereof by the inventors and that enables those of ordinary skill in the art to make and use the inventions, it will be understood and appreciated that there are many equivalents to the examples disclosed herein and that myriad modifications and variations may be made thereto without departing from the scope of the inventions, which are to be limited not by the examples but by the appended claims.

**Claims**

1. A method for network assisted cell reselection in a mobile station (110), the method **characterized by**:

   sending (710) a network controlled/assisted reselection mode support communication to a network, wherein the network controlled/assisted reselection mode support communication indicates whether the mobile station (110) is capable of performing reselection prediction;
   receiving (720) a reselection control communication from the network in response to sending the network controlled/assisted reselection mode support communication to the network; and
   disabling (720) a reselection parameter on the mobile station in response to receiving the reselection control communication,
   wherein the reselection parameter is a cell ranking parameter.

2. The method of Claim 1, disabling reselection in the mobile station based on adjacent cell information in response to the reselection control communication from the network.

3. The method of Claim 1, reselecting (740) using a reselection predictor on the mobile station when a packet broadcast control channel, PBCCH, is present in a serving cell.

4. A mobile station configured to perform the steps of the method of any preceding claim.

5. A method for network assisted cell reselection in a mobile wireless communication network, the method **characterized by**:

   receiving a network controlled/assisted reselection mode support communication from a mobile station (110);
   sending a reselection control communication to the mobile station (110) in response to receiving the network reselection mode support communication from the mobile station,
   the reselection control communication instructing the mobile station (110) to disable reselection based on adjacent cell information;
   sending a reselection control communication includes instructing the mobile station (110) to disable a cell ranking parameter on the mobile station in response to receiving the reselection control communication.

6. The method of Claim 5, wherein the network reselection mode support communication indicates whether the mobile station (110) is capable of performing reselection prediction.

**Patentansprüche**

1. Verfahren zur netzunterstützten Zellenneuauswahl in einer Mobilstation (110), wobei das Verfahren durch Folgendes gekennzeichnet ist:

   Senden (710) einer netzgesteuerten/-gestützten Neuauswahlmodus-Supportkommunikation an ein Netz, wobei die netzgesteuerte/-gestützte Neuauswahlmodus-Supportkommunikation anzeigt, ob die Mobilstation (110) zur Durchführung einer Neuauswahlvorhersage fähig ist;
   Empfangen (720) einer Neuauswahlsteuerkommunikation von dem Netz ansprechend auf das Senden der netzgesteuerten/-gestützten Neuauswahlmodus-Supportkommunikation an das Netz; und
   Deaktivieren (720) eines Neuauswahlparameters in der Mobilstation ansprechend auf den Empfang der Neuauswahlsteuerkommunikation,
   wobei der Neuauswahlparameter ein Zellenbewertungsparameter ist.

**2.** Verfahren nach Anspruch 1, wobei die Neuauswahl in der Mobilstation basierend auf Informationen über angrenzende Zellen ansprechend auf die Neuauswahlsteuerkommunikation von dem Netz deaktiviert wird.

**3.** Verfahren nach Anspruch 1, wobei das Neuauswählen (740) einen Neuauswahlprädiktor in der Mobilstation verwendet, wenn ein Paketsendesteuerkanal (packet broadcast control channel, PBCCH) in einer versorgenden Zelle vorhanden ist.

**4.** Mobilstation, die zur Durchführung der Schritte des Verfahrens nach einem der vorhergehenden Ansprüche ausgestaltet ist.

**5.** Verfahren zur netzgestützten Zellenneuauswahl in einem mobilen drahtlosen Kommunikationsnetz, wobei das Verfahren durch Folgendes gekennzeichnet ist:

Empfangen einer netzgesteuerten/-gestützten Neuauswahlmodus-Supportkommunikation von einer Mobilstation (110);
Senden einer Neuauswahlsteuerkommunikation an die Mobilstation (110) ansprechend auf den Empfang der Netz-Neuauswahlmodus-Supportkommunikation von der Mobilstation,
wobei die Neuauswahlsteuerkommunikation die Mobilstation (110) anweist, eine Neuauswahl basierend auf Informationen über angrenzende Zellen zu deaktivieren;
wobei das Senden einer Neuauswahlsteuerkommunikation ein Anweisen der Mobilstation (110) einschließt, einen Zellenbewertungsparameter in der Mobilstation ansprechend auf den Empfang der Neuauswahlsteuerkommunikation zu deaktivieren.

**6.** Verfahren nach Anspruch 5, wobei die Netz-Neuauswahlmodus-Supportkommunikation anzeigt, ob die Mobilstation (110) zur Durchführung einer Neuauswahlvorhersage fähig ist.

## Revendications

**1.** Procédé de sélection nouvelle de cellule assistée par le réseau dans une station mobile (110), le procédé étant **caractérisé par**
envoyer (710) une communication de support de sélection nouvelle assistée par le réseau à un réseau, où la communication de support de sélection nouvelle assistée par le réseau indique si la station mobile 110) est apte à effectuer une prévision de sélection nouvelle,
recevoir (720) du réseau une communication de commande de sélection nouvelle en réponse à l'envoi de la communication de support de sélection nouvelle assistée par le réseau, au réseau, et
désactiver (720) un paramètre de sélection nouvelle à la station mobile en réponse à la réception de la communication de commande de sélection nouvelle,
où le paramètre de sélection nouvelle est un paramètre de rang de cellule.

**2.** Procédé selon la revendication 1, désactivant la sélection nouvelle dans la station mobile sur la base d'informations de cellules adjacentes en réponse à la communication de commande de sélection nouvelle du réseau.

**3.** Procédé selon la revendication 1, la sélection nouvelle (740) utilisant un indicateur de sélection nouvelle à la station mobile lorsqu'un canal de commande de diffusion de paquet (PBCCH) est présent dans une cellule de desserte.

**4.** Station mobile agencée pour effectuer les étapes du procédé selon l'une des revendications précédentes.

**5.** Procédé de sélection nouvelle de cellule assistée par le réseau dans un réseau mobile de communication sans fil, le procédé étant **caractérisé par**
recevoir d'une station mobile (110) une communication de support de mode de sélection nouvelle assistée par le réseau,
envoyer à la station mobile (110) une communication de commande de sélection nouvelle en réponse à la réception de la station mobile de la communication de support de mode de sélection nouvelle de réseau,
la communication de commande ordonnant à la station mobile de désactiver une sélection nouvelle basée sur des informations de cellules adjacentes,
envoyer une communication de commande de sélection nouvelle comprend ordonner à la station mobile (110) de désactiver un paramètre de rang de cellule à la station mobile en réponse à la réception de la communication de commande de sélection nouvelle.

6. Procédé selon la revendication 5, où la communication de support de mode de sélection nouvelle de réseau indique si la station mobile (110) est apte à effectuer une prévision de sélection nouvelle.

**CELL B** — 130

120

110

**CELL A**

**CELL C** — 140

# FIG. 1

_200_

```
┌─────────────────────┐
│  SEND RESELECTION   │
210 ─│  COMMUNICATION TO   │
│      NETWORK        │
└─────────────────────┘
           │
           ▼
┌─────────────────────┐
│  RECEIVE RESPONSE   │
220 ─│    FROM NETWORK     │
└─────────────────────┘
```

# FIG. 2

```
                              TO THE
                             NETWORK                    _300_
                                 ▲
               PREDICTED MOMENT  │─ 306
               OF THE CLOSEST
    310          RESELECTION                  PREDICTED NUMBER
     )                                            OF DATA
                 SERVING                       IN THE VSB QUEUE
┌──────────────────┐ CELL    ┌────────────┐   AT THE MOMENT
│ MEASUREMENTS AND │   )   ──▶│ RESELECTION│◀──────────────────▶  TO THE
│RESELECTION CRITERIA│  304    │  PREDICTOR │          )         VSB QUEUE
│  CALCULATION FOR │          └────────────┘         308
│   SERVING AND    │ RESELECTION   └ 302
│  ADJACENT CELLS  │  COMMAND    ┌────────────┐
│                  │   ──────────▶│ RESELECTION│◀──────────────▶ TO/FROM
└──────────────────┘             │  EXECUTION │                THE NETWORK
      ▲                          └────────────┘
      │      SUCCESS OR FAILURE     └ 320
      └─────────────────────────────┘
```

# FIG. 3

RESELECTION CRITERIA VALUES CALCULATED BASED
ON SLIDING PARABOLA APPROXIMATION

RESELECTION CRITERIA VALUES CALCULATED
BASED ON THE RAW RSSI MEASUREMENTS

SLIDING
PARABOLA

i+1

i+3

i+5

i

i+2

i+4

i+6

TIME

## FIG. 4

RESELECTION CRITERIA

$m \Delta T$

m CHECK POINTS

$a_1$

$a_0$

PREDICTED RESELECTION
MOMENT Tr

$a_2$

TIME

POTENTIAL RESELECTION HAS
BEEN DETECTED Td

## FIG. 5

600

610

620

# FIG. 6

*700*

```
┌─────────────────┐
│  MS INDICATES   │ ─ 710
│ NCARM SUPPORT   │
└────────┬────────┘
         │
         ▼
┌─────────────────┐
│  NW INSTRUCTS MS│
│ TO DISABLE ANONYMOUS │ ─ 720
│   RESELECTION   │
└────────┬────────┘
         │
         ▼
       ╱730
      ◇ PBCCH PRESENT ◇
  YES ╱      ?       ╲ NO
```

- MS USES RESELECTION PREDICTOR — 740
- NW SENDS NEW "C1" CRITERION T-HOLD ? — 750
  - YES → MS USES RESELECTION PREDICTOR — 760
  - NO → MS USES 5 SECOND RESELECTION WARNING — 770

*FIG. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 42719002 P

**Non-patent literature cited in the description**

- 3rd Generation Partnership Project; Technical Specification Group GSM EDGE Radio Access Network; External Network Assisted Cell Change (Release 5). *3GPP Technical Report, Tdoc G2-010430,* 22 October 2001